# EUROPEAN PATENT APPLICATION

(11) **EP 1 626 345 A1**
(43) Date of publication of application: **15.02.2006**
(21) Application number: 04732207.8
(22) Date of filing: 11.05.2004
(51) Int. Cl.: G06F 13/00, G06F 17/21

(54) **DOCUMENT DATA OUTPUT DEVICE CAPABLE OF APPROPRIATELY OUTPUTTING DOCUMENT DATA CONTAINING A TEXT AND LAYOUT INFORMATION**

(30) Priority: 14.05.2003 JP 2003135701; 27.11.2003 JP 2003397608; 13.04.2004 JP 2004117705
(71) Applicant: SHARP KABUSHIKI KAISHA, Osaka 545-8522 (JP)
(72) Inventor: ZAIMA, Hiroaki, Tenri-shi, Nara 6320004 (JP); TSUMORI, Osamu, Nara-shi, Nara 6310033 (JP); ONO, Shuichiro, Kyoto 6190232 (JP)
(74) Representative: Brown, Kenneth Richard
(86) International application number: PCT/JP2004/006621
(87) International publication number: WO 2004/102398

(57) **Abstract**

A document data display system uses document data composed of text and image portions and layout information and creates from it compressed document data by lossless compressing the text portion and lossless or lossy compressing the image portion in order to reduce traffic in communication. A document data display device 1 expands text or image portions from received compressed document data at a text expansion unit (105) or an image expansion unit (106), and uses the analysis of the layout information by a layout information analyzing unit (107) to arrange the text or image portions at a development unit (108) before being displayed by a display unit (109).

## Description

### Technical Field

The present invention relates to a document data display device, a cell phone device, a document data output device, a document data printing device, a document data display method, a document data output method, a document data display program product and a document data output program product, and more particularly, to a document data display device, a cell phone device, a document data output device, a document data printing device, a document data display method, a document data output method, a document data display program product, and a document data output program product capable of displaying document data including text and layout information.

### Background Art

As an example of a conventional document data display device, Japanese Patent Laying-Open No. 4-119457 discloses a document processor characterized in formatting and composing documents including text, graphics and images irrespective of connected displays or printers, and presenting the composed documents in accordance with the capability of the displays or printers. Such a document processor allows an edited document to be output in accordance with the capability of connected displays or printers.

Smaller output devices such as cellular phones are being proposed. Unfortunately, these output devices have limitations in terms of screen size and available fonts such that a document that has been processed in a document processor in a described manner may not be optimally displayed. For example, a smaller size screen may display a fraction of a large document at a time, resulting in an uncomfortable viewing experience. Further, some scaling factors involve a font size that is not available on the device, causing deterioration in display quality.

In view of the above problems, an object of the present invention is to provide a document data display device, a cell phone device, a document data output device, a document data printing device, a document data display method, a document data output method, a document data display program product and a document data output program product capable of displaying documents in an optimized manner.

### Disclosure of the Invention

To achieve the above object, according to an aspect of the present invention, a document data display device includes: a receiving unit receiving, from another device, compressed document data that includes at least one of one or more lossless compressed text portion(s) and one or more lossless or lossy compressed image portion(s) and further includes layout information for the text portion(s) and/or the image portion(s); an expansion unit expanding at least one of the compressed text and image portions included in the compressed document data received by the receiving unit; and a display unit displaying the document data expanded by the expansion unit in accordance with the layout information.

According to another aspect of the present invention, a document data display device includes: a receiving unit receiving, from another device, document data that includes at least one of a text portion, a graphics portion and an image portion and further includes layout information therefor; and a display unit displaying the document data in accordance with the layout information.

According to yet another aspect of the present invention, a document data display device includes: a document data combining unit combining a plurality of divided document data segments into one original document data set; and a display unit displaying the one document data set as the divided document data segments.

According to still another aspect of the present invention, a cell phone device includes any document data display device as described above.

According to yet another aspect of the present invention, a method of displaying document data includes the steps of: receiving, from another device, compressed document data that includes at least one of one or more lossless compressed text portion(s) and one or more lossless or lossy compressed image portion(s) and further includes layout information for the text portion(s) and/or the image portion(s); expanding at least one of the compressed text and image portions included in the compressed document data; and displaying the expanded document data in accordance with the layout information.

According to still another aspect of the present invention, a document data display program product is a program product for causing a computer to execute a data display method, the method including the steps of: receiving, from another device, compressed document data that includes at least one of one or more lossless compressed text portion(s) and one or more lossless or lossy compressed image portion(s) and further includes layout information for the text portion(s) and/or the image portion(s); expanding at least one of the compressed text and image portions included in the compressed document data; and displaying the expanded document data in accordance with the layout information.

According to yet another aspect of the present invention, a document data output device includes: an output unit outputting document data, the document data including area data information regarding at least one of a character area, a graphics area and an image area and further including layout information for the area; and an output control unit controlling output of the document data at the output unit based on the area data information and the layout information included in the document data, and on attribute information about the output unit.

According to yet another aspect of the present invention, a document data output method is a method of outputting document data at a document data output device, including the steps of: storing document data in a storage unit of the document data output device, the document data including at least one of a character area, a graphics area and an image area and further including data of the area and layout information about the area; outputting the document data at an output unit of the document data output device; and controlling output of the document data at the output unit based on at least one attribute information set stored in an attribute information storage unit of the document data output device storing one or more attribute information set(s) about the output unit, and on the document data stored in the storage unit.

According to still another aspect of the present invention, a document data output program product is a program product causing a computer to execute a method of outputting document data, the document data including at least one of a character area, a graphics area and an image area, and further including data of the area and layout information for the area, the method including the steps of: storing the document data in a storage unit of a document data output device; outputting the document data at an output of the document data output device; and controlling output of the document data at the output unit based on at least one attribute information set stored in an attribute information storage unit of the document data output device storing one or more attribute information sets about the output unit, and on the document data stored in the storage unit.

Finally, according to an aspect of the present invention, a document data printing device includes a request-to-send unit requesting document data to be sent from other equipment; a receiving unit receiving, from the other device, document data including at least one of a text portion, a graphics portion and an image portion, and further including layout information therefor; a display unit displaying the document data in accordance with the layout information; and a printing unit printing the document data.

### Brief Description of the Drawings

Fig. 1 illustrates a concrete configuration of a document data display system according to the present embodiment.
Fig. 2 illustrates a concrete configuration of a document data display device 1 according to the present embodiment.
Fig. 3 illustrates a concrete configuration of a conversion server 2 according to the present embodiment.
Fig. 4 is a flowchart showing processes of document data conversion at conversion server 2.
Figs. 5A to 5D illustrate document data compression according to the present embodiment.
Figs. 6 and 7 show examples of document data.
Figs. 8 and 9 show an example of document data converted to SVG-T format and an example of the data being displayed.
Fig. 10 is a flowchart illustrating processes for displaying document data at a receiving display device 1b.
Fig. 11 shows an example of displayed compressed document data at document data display device 1.
Fig. 12 shows an example of displayed compressed document data to be edited by document data display device 1.
Fig. 13 shows an example of the displayed compressed document data after being edited by document data display device 1.
Fig. 14 shows an example of displayed compressed document data including area information.
Fig. 15 illustrates a method of displaying compressed document data including area information.
Fig. 16 illustrates a method of displaying compressed document data using a substitute image.
Fig. 17 illustrates a method of displaying compressed document data including class information.
Figs. 18A to 18C illustrate a procedure of determining a changed position for changing a display region.
Fig. 19 illustrates a method of displaying a display region.
Fig. 20 illustrates a method for determining a display scaling factor.
Fig. 21 illustrates a printing device including a document data display method according to the present embodiment.
Fig. 22 is a flowchart illustrating processes for document data conversion at conversion server 2 according to a variation of the present invention.
Fig. 23 shows an example of divided document data segments.
Fig. 24 illustrates a procedure of dividing document data.
Fig. 25 shows an example of attribute information stored in an attribute storage unit.
Fig. 26 is a flowchart illustrating processes for document data output at document data display device 1.

### Best Modes for Carrying Out the Invention

An embodiment of the present invention will be described below with reference to the drawings. In the description below, like parts and components have like reference characters which have like names and functions and thus will not be described in detail more than once.

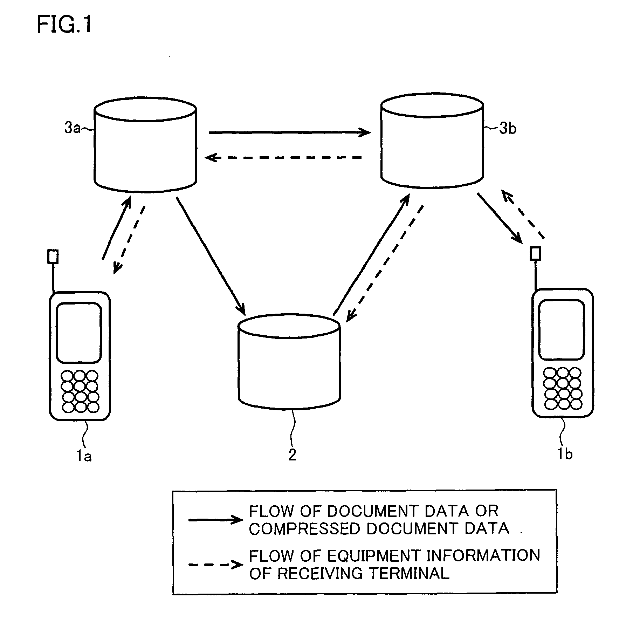

Referring to Fig. 1, a document data display system according to the present embodiment includes document data display devices 1a and 1b (hereinafter referred to document data display device 1, which represents the both) capable of sending/receiving and displaying document data, and which are capable of exchanging document data with each other via a gateway A(3a) and a gateway B(3b). Gateway A(3a) and gateway B(3b) can also send and receiving document data. Document data may also be sent/received via a conversion server 2 as necessary. Gateway A(3a) and gateway B(3b) may also be a single same server.

The present embodiment will be described for a document data display system as described above where a document data display device 1a sends document data or document data that has been compressed (hereinafter referred to as compressed document data), and document data display device 1b receives the data and display it.

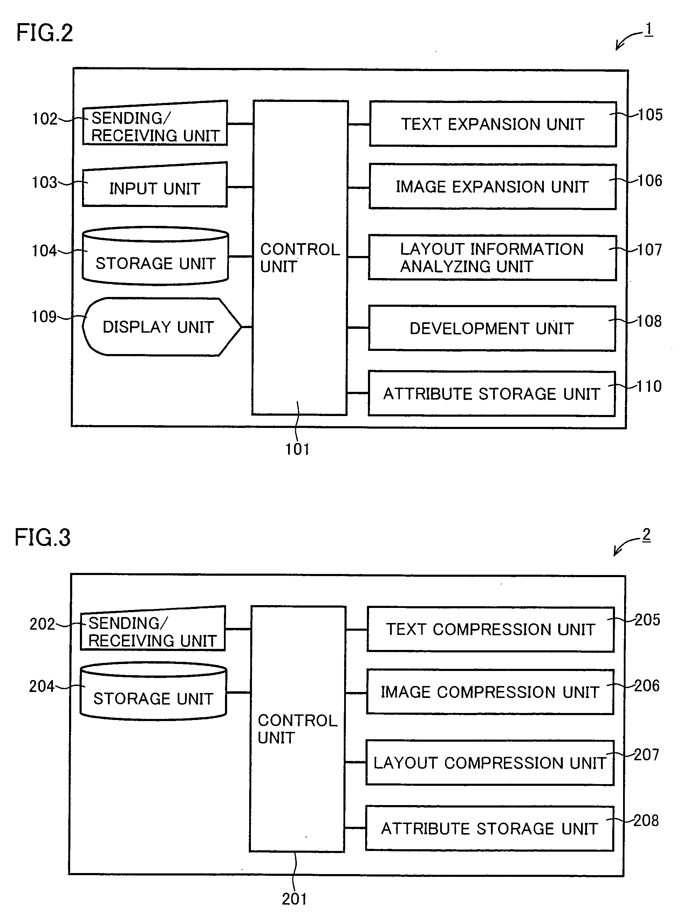

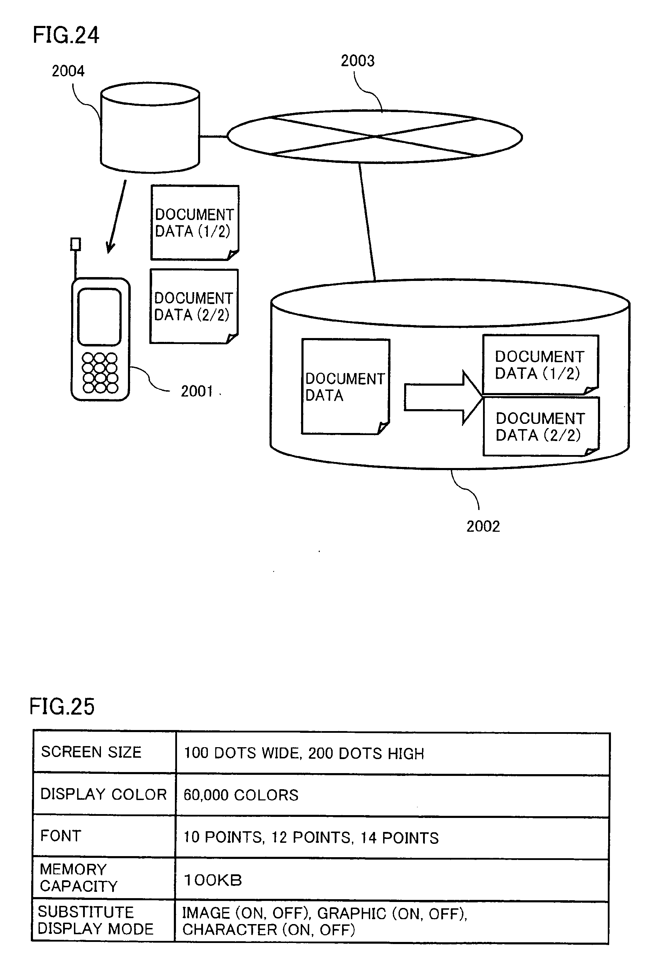

Referring to Fig. 2, a document data display device 1 includes: a control unit 101 constructed by a central processing unit (CPU) or the like for controlling the entire device; a sending/receiving unit 102 constructed by an antenna or the like for sending and receiving data such as document data or compressed document data; an input unit 103 constructed by a keyboard or a mouse or the like for receiving information input from a person sending or viewing document data; a storage unit 104 constructed by a read only memory (ROM) or a random access memory (RAM) or the like for storing a program or the like to be executed by control unit 101; a text expansion unit 105 for expanding a lossless compressed text portion included in compressed document data; an image expansion unit 106 for expanding a compressed image portion included in compressed document data; a layout information analyzing unit 107 for analyzing layout information included in compressed document data; an attribute storage unit 110 for storing attributes such as screen size, font size usable by the relevant document data display device 1, presentable color and memory capacity, as illustrated in Fig. 25; a development unit 108 for performing development in accordance with the result of processes by text expansion unit 105, image expansion unit 106 and layout information analyzing unit 107 as well as attributes stored in attribute storage unit 110; and, finally, a display unit 109 for displaying contents developed by development unit 108. In the present embodiment, a document data display device 1 as described above transmits and displays document data.

It should be noted that layout information used herein includes information regarding the arrangement of character areas such as the size of an entire document and the size or position of each part, as well as information used in determining the position of a character within a character area, and form information about, for example, the color or decoration or font type of a character. Thus, information regarding a character area includes information specifying a character as well as information determining the position of a character within a character area or character decoration, such as font type, size, coordinates, angle of rotation, space between characters, space between lines, space for a character, word space, the manner of alignment such as centering, and bold or italic.

Referring to Fig. 3, a conversion server 2 includes: a control unit 201 constructed by a CPU or the like for controlling the entire device; a sending/receiving unit 202 constructed by an antenna or the like for sending and receiving data, for example receiving document data or compressed document data from gateway A3 a, or sending compressed document data to gateway B3b; a storage unit 204 constructed by a ROM or RAM or the like for storing a program or the like to be executed by control unit 201; a text compression unit 205 for lossless compressing a text portion included in document data; an image compression unit 206 for compressing an image portion included in document data; a layout compression unit 207 for analyzing document data to generate layout information for text and image portions; and an attribute storage unit 208 for storing attributes of document data display device 1 such as screen size, font size usable by the destination display device 1, presentable color, memory capacity as illustrated in Fig. 25, or predetermined attributes for conversion, as well as other attributes such as traffic allowed by the document data display system. Attribute information about the destination display device 1 stored in attribute storage unit 208 may be pre-stored or may be acquired from document data display device 1 at a predetermined time such as at conversion described below, before being stored.

When conversion server 2 according to the present embodiment receives document data or compressed document data for receiving display device 1b from sending display device 1a via gateway A(3a), it compresses the document data where equipment information, i.e. attributes of document data display device 1b, may be acquired from gateway B(3b) or from receiving display device 1b via gateway B(3b) and used as necessary.

Although document data conversion occurs at conversion server 2 according to the present embodiment, it may also occur at one of sending display device 1a, gateway A(3a), gateway B(3b) or conversion server 2, or document data may also be transmitted from a Web server or other servers such as a mail server or file server including a conversion server. It may also occur at a single server that serves as gateway A(3a), gateway B(3b) and conversion server 2.

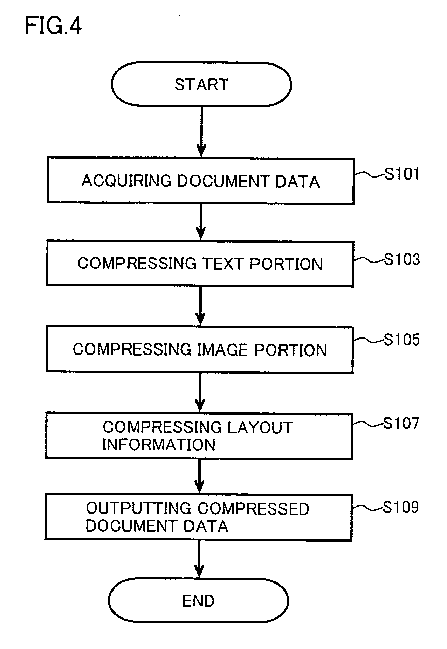

Document data conversion at conversion server 2 will now be described with reference to the flowchart in Fig. 4. The processes shown in the flowchart of Fig. 4 are implemented by control unit 201 of conversion server 2 reading a program stored in storage unit 204 and executing it.

Referring to Fig. 4, sending/receiving unit 202 first acquires document data or compressed document data for receiving display device 1b from sending display device 1a via gateway A(3a)(S101). Such document data may be attached to an e-mail message for reception, or may be received alone. The received document data may then be stored in storage unit 204.

Text and image compression units 205 and 206 then extract text and image portions, respectively, from the document data acquired at step S101, and compress them (S103, S105).

Further, layout compression unit 207 may extract, as necessary, layout information representing the layout of the text portion and that of the image portion from the document data acquired at step S101, and compresses the layout information (S107).

The present invention is not limited to a specific manner of compression of steps S103 to S107 and may provide, for example, a compression technique employing a reversible compression algorithm such as LZH or ZIP®.

The compression ratio for the compression processes at steps S103 to S107 may be predefined by conversion server 2, or may be adjustable in accordance with a specification by sending display device 1a, or may be adjustable in accordance with a specification by gateway B(3b). The compression ratio may also be determined based on attributes of document data display device 1b stored in attribute storage unit 208 such as screen size or font size available in the terminal, a predetermined attribute, or other attributes such as traffic allowed by the document data display system.

Instead of being compressed as described above, all the images, graphics and characters may be converted to substitute images or substitute graphics if the substitute display mode in attribute information stored in attribute storage unit 208 shown in Fig. 25 is ON for each of image, graphic and character.

Alternatively, at least some of the images, graphics and characters included in the document data may be converted to substitute images or substitute graphics based on attribute information stored in attribute storage unit 208. For example, the attribute information may include a predetermined display size, where images, graphics or characters not grater than the display size may be converted to substitute images or substitute graphics. Further, the substitute images or graphics may be images or graphics resulting from the conversion of original images, graphics or characters instead of pre-installed images or graphics. For example, in conjunction with the example above, images or graphics may be obtained by converting original images, graphics or characters using a scaling factor that satisfies a display scaling factor included in the attribute information. Conversion using a scaling factor that satisfies a display scaling factor includes, for example, converting an original graphic into a graphic with points on the graphic being subtracted, and converting a curve in an original graphic into a straight line.

Finally, the compressed document data composed of information provided from steps S103 to S107 is output from sending/receiving unit 202 via gateway B(3b) to receiving document data display device 1b (S109).

Although document data conversion is now completed, sending/receiving unit 202 may preferably also send the compressed document data to sending display device 1a via gateway A(3a) at step S109 such that sending display device 1a confirms the compressed document data.

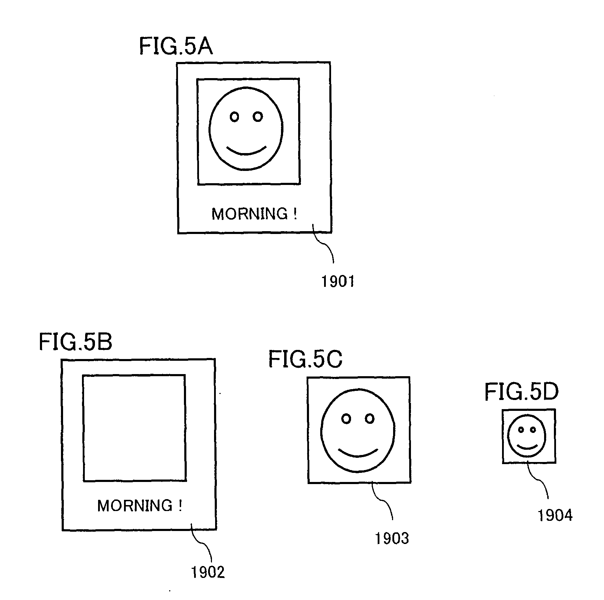

The compression processes of steps S103 to S107 above will now be described with reference to Figs. 5A to 5D. The compression processes according to the present embodiment divide document data including an image portion, 1901 (Fig. 5A), into document data including layout information but not including the image portion, 1902 (Fig. 5B), and image portion 1903 (Fig. 5C). Image portion 1903 is composed of graphics such as rectangles and lines. Image portion 1903 is compressed by decreasing the number of colors or changing the size, resulting in an image portion 1904 (Fig. 5D). At this time, document data 1902 may also be modified as necessary. For example, when the vertical and horizontal sizes of image portion 1903 are each reduced by half, the layout information for document data 1902 is modified such that image portion 1904 is displayed in the double vertical and horizontal sizes.

Thus, the compressed document data from the compression of the above steps S103-S107 typically includes a lossless compressed text portion and a compressed image portion and layout information. The layout information may also be compressed by the compression of the above step S107. Further, the compressed image portion and layout information may be converted to a character string using an encoding scheme such as base64, and may then be lossless compressed together with the text portion.

The image portion may be composed of a raster or vector static image or dynamic image. The raster mode provides pixel-based representation and records the number of pixels in a column and a row of an image as well as the color information for each pixel. The vector mode represents an image by an aggregation of graphics and records their coordinates, size and direction. A vector image may be segregated and treated as a graphics portion.

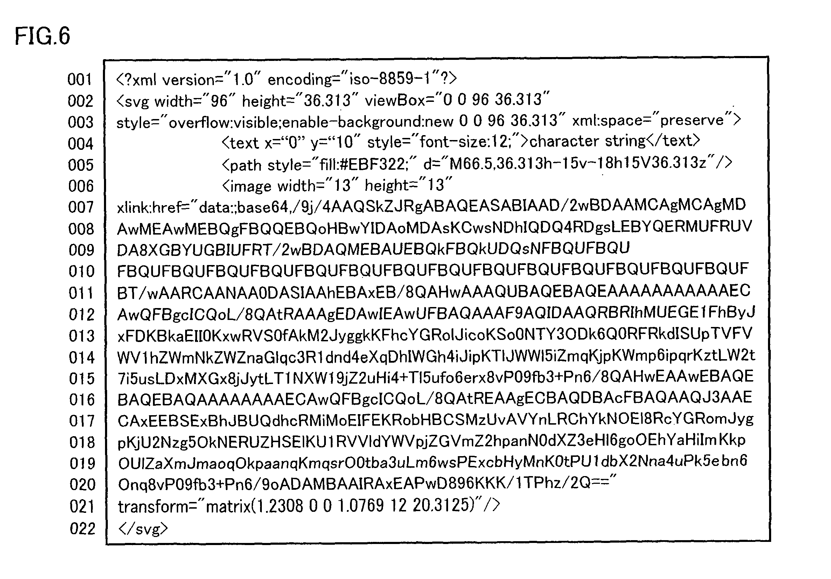

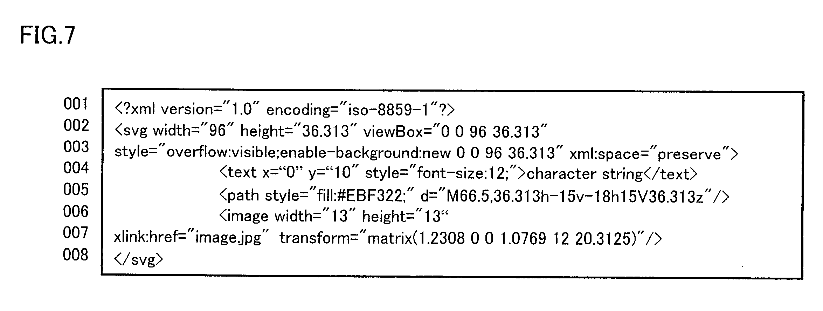

Examples of document data to be converted at conversion server 2 are shown in Figs. 6 and 7. Document data as shown in Figs. 6 and 7 is compressed by a reversible compression algorithm such as LZH or ZIP® at the above steps S103 to S107 to provide compressed document data. Figs. 6 and 7 show examples of document data in Scalable Vector Graphics (SVG) data format, and the document data in the present embodiment is not limited to this data format. With SVG data, document data includes contents of text and image portions as well as their layout information, as described below. Figs. 6 and 7 describe the same document data in different manners, where both share lines 001-006. Line 001 describes the type of character encoding for document data, while lines 002-003 describe the width and height of the entire document and the like. Line 004 describes the position, color and contents of text, line 005 the position, color and shape of a graphic, line 006 the position, width and height of an image, and the like. Lines 007-021 in Fig. 6 is the contents of an image file "image.jpg" in line 007 of Fig. 7 which has been encoded into base64 format.
That is, the document data in Fig. 6 compressed alone is equivalent to the document data in Fig. 7 and the lossy compressed image file "image.jpg" compressed together.

The compression at steps S103 to S107 needs to be reversible with respect to the contents of a text portion, although they may be non-reversible for layout information and an image portion. The compression of layout information at step S107 may employ a mechanical compression algorithm such as LZH, or may be a semantic compression. For example, text may be represented by "0x01", a graphic by "0x02", and an image by "0x03" and, in the case of text, may be followed by the X coordinate, Y coordinate indicating the position of the text and the number of bytes in the character string(s) which are each represented by two bytes, followed by the character string(s) of the text to provide semantic compression adapted to the contents of document data. Further, text compression may be performed such that group information specifying groups such as paragraphs or columns may be included so that these groups can be identified during expansion and the text may be displayed on the screen based on these groups. Fig. 7 shows a format where different data sets are referenced by file names, although the location of a file may be specified by Uniform Resource Locators (URL), or the nth byte in the compressed document data may be specified.

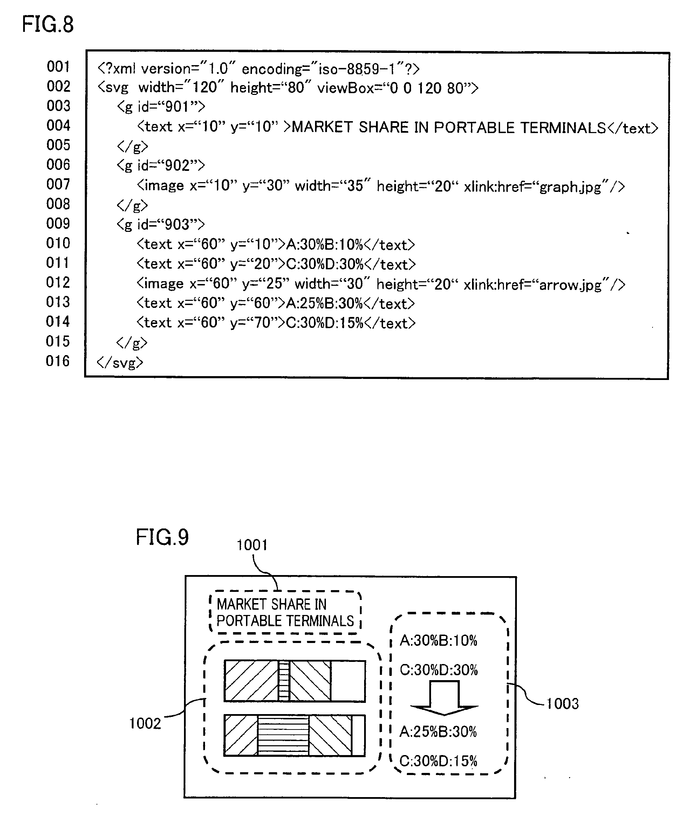

Instead of, or together with, the compression processes at steps S103 to S107, the above conversion may convert document data into Scalable Vector Graphics Tiny (SVG-T) format, a variation of Scalable Vector Graphics (SVG) data, as shown in Fig. 8. An example of document data shown in Fig. 8 being displayed is shown in Fig. 9.

For example, referring to Fig. 8, the portion between tag <g> in line 003 and tag </g> in line 005 includes one text portion that describes an area 1001 shown in Fig. 9. The portion between tag <g> in line 006 and tag </g> in line 008 includes one image portion that describes an area 1002 shown in Fig. 9. Finally, the portion between tag <g> in line 009 and tag </g> in line 015 includes text and image portions discernibly mixed, which describe an area 1003 shown in Fig. 9.

Document data in this format is described by one kind of tag, <g>, where the middle portion between tags <g> and </g> includes discernible text and image portions. That is, the middle portion includes area information that allows discerning whether the area represented by the middle portion is a text portion or an image portion. Thus, this data format does not require complex processing for analysis and is suitable for smaller display devices such as cellular phones.

Further, when the above conversion compresses document data as above, the data to be converted may include area information that allows discerning whether an area is a text portion or an image portion. The area itself may be a rectangular region that can contain all the text and image portions in this area. Compressed document data may also include information specifying an explicit region as area information.

Conversion server 2 according to the present embodiment converts received document data to document data in a data format as described above such that document data in an application-specific data format created by a variety of document data composition applications such as WORD® or EXCEL® or PDF®, for example, is converted to document data in a data format that is not dependent on the application. Thus, receiving display device 1b does not need to have a variety of applications for display and, if analysis and display for such a data format are possible, is capable of displaying document data in a variety of data formats sent from sending display device 1a.

Further, after converting document data into SVG-T format, conversion server 2 according to the present embodiment performs the compression processes of the above steps S103 to S107 such that character information is retained in the compressed document data. Thus, while document data compressed in a way that converts character information into image information would often have broken typeface in the case of scaled-up or scaled-down display, display is here performed based on character information such that scaled-up or scaled-down display does not result in broken typeface, thereby enabling maintaining neat display.

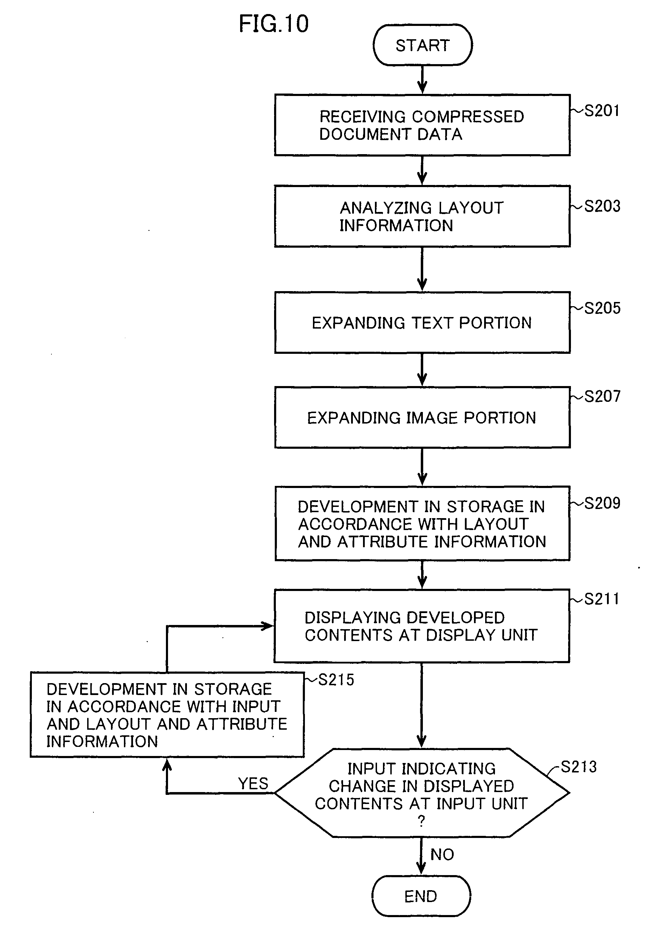

Document data display processes using a receiving display device 1b of the present embodiment to display compressed document data as above will now be described with reference to the flowchart in Fig. 10. The processes shown in the flowchart of Fig. 10 are implemented by control unit 101 of document data display device 1b reading a program stored in storage unit 104 and executing it.

Referring to Fig. 10, sending/receiving unit 102 first receives compressed document data (S201). The compressed document data may be attached to an e-mail message for reception, or may be received alone. The received compressed document data may then be stored in storage unit 104.

Layout information analyzing unit 107 then analyzes layout information included in the compressed document data (S203), and text expansion unit 105 and image expansion unit 106 expand a lossless compressed text portion included in the compressed document data and a lossless or lossy compressed image portion (S205, S207). The result from the analysis of the layout information may be associated with the contents of the expanded text and image portions to be stored in storage unit 104.

Development unit 108 then develops the contents of the expanded text and image portions in a development memory in storage unit 104 in accordance with the analyzed layout information and attribute information stored in attribute storage unit 110 (S209). Step S203 may also perform steps S205 to S209 concurrently with the analysis of the layout information. That is, while the document data shown in Figs. 6 and 7 has text, graphics and images appearing in this order, they may be successively expanded and developed in storage unit 104 as they appear without waiting for the completion of the layout analysis.

Finally, display unit 109 displays the contents developed in the development memory (S211). A printing unit, if included in document data display device 1b, may print the contents developed in the development memory.

Although the display is now completed, determination may be additionally made as to whether a change in the displayed contents is input at input unit 103 (S213) if displayed content is changeable at input unit 103. For example, up, down, left and right movements of the display region may be each assigned to a cursor key, where one depression of the down cursor key causes a region to be displayed below the current display position by a few lines or by a few percent of the entire document or page height. Increase and decrease in display scaling factor may be assigned to the numerical keys "7" and "8", where one depression of "7" results in a display scaling factor 1.5 times the current display scaling factor, while one depression of "8" provides a display scaling factor 0.5 times the current display scaling factor. Setting a full-size display scaling factor and setting a display scaling factor that makes the width or height of a page adapted to the screen may be assigned to the numerical keys "9" and "0", respectively, where a depression of "9" causes display by a display scaling factor determined based on the document data, while a depression of "0" determines a display scaling factor that makes the width or height of a document adapted to the width or height of the screen.

Next, when control unit 101 detects an input indicating a change in displayed contents at input unit 103 at step S213 (YES at S213), control unit 101 issues a control signal and text expansion unit 105 or image expansion unit 106 responds to it by expanding text or image portions based on the input, layout information and attribute information stored in attribute storage unit 110, and the result is developed in development memory (S215), followed by the process of step S211.

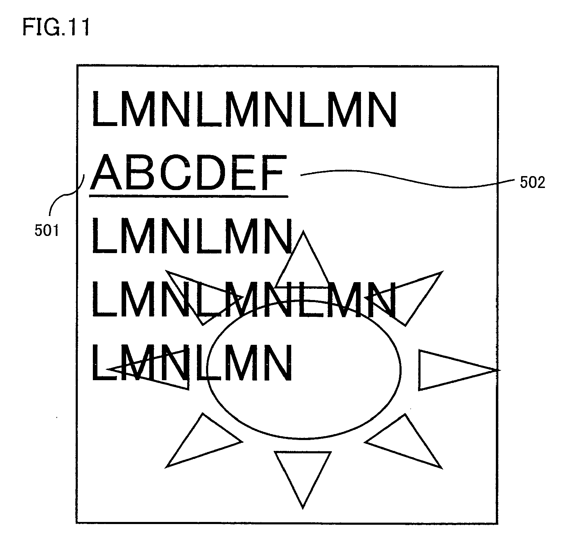

Furthermore, the present embodiment provides for selecting part or all of the text at input unit 103 and storing it in storage unit 104. For example, referring to Fig 11, only the string "ABCDEF" out of the displayed strings in Fig. 11 may be stored by using a cursor key to move a cursor, which indicates the current selected position, to position 501 at the beginning of the second line and depressing a key confirming the starting point for selection (for example the numerical key "1"), and moving the cursor to position 502 at the end of the second line and then depressing a key confirming the end point for selection (for example the numerical key "2"), whereby the string between the starting point and the end point for selection is stored in storage unit 104.

As Fig. 11 shows the string "ABCDEF" which is underlined and bold, such layout information, for example form information such as font size of a character or color information, may additionally be stored in storage unit 104. Further, layout information, for example the position of the beginning of the second line, or coordinates within a document, may also be stored in storage unit 104. As an example, information may be stored indicating that a character string in a size of 20 pixels high and 100 pixels wide is to be disposed 100 pixels right from, and 200 pixels below, the upper left corner of the document or any other reference point. Alternatively, coordinates relative to the uppermost and far left position within the display screen may be stored. Although description has been made to each key corresponding to one function, a combination of two or more keys may correspond to two or more functions, or a menu may be presented on the screen to allow selection. Preferably, a way of switching between browsing and editing may be provided if the cursor keys are used both for moving the display region and moving the edit position.

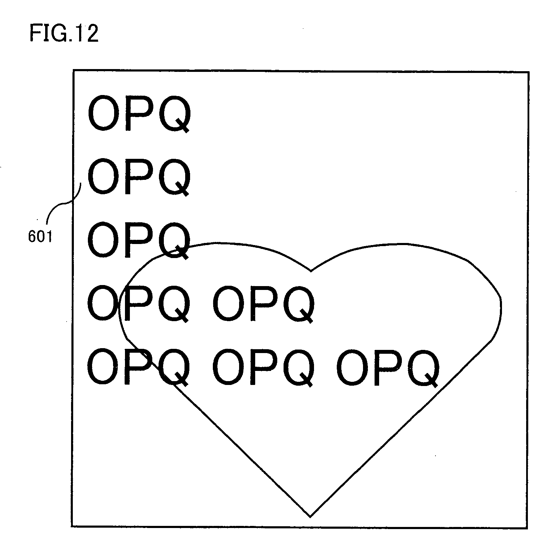

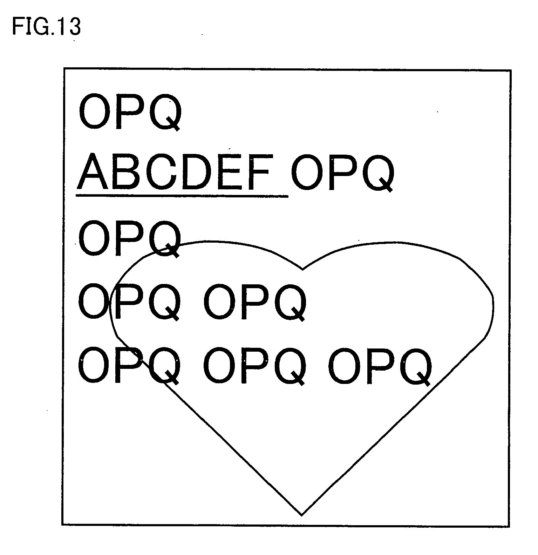

Further, in the present embodiment, development unit 108 uses the contents of a character string stored in storage unit 104 to edit in a text region specified by an input at input unit 103. Referring to Figs. 12 and 13, the string "ABCDEF" stored in storage unit 104 as above may be edited into a document as in Fig. 12 where input unit 103 is used to move the cursor to position 601 at the beginning of the second line and a key for editing in a content in storage unit 104 (for example the numerical key "3 ") is depressed, whereby development unit 108 inserts a character string stored in storage unit 104 at the beginning of the second line, as in Fig. 13. Form or color of the characters, if stored as well, may be reflected, such as bold or underlining as in Fig. 13. Further, if layout information is also stored, selection may be made from a menu to allow layout information to be retained for insertion without specifying an insertion position by the cursor. Moreover, a character string stored in storage unit 104 may be disposed by superimposing it on an existing document, i.e., may be superimposed on, or under, an existing character string as a new string rather than being edited into an existing string. Also, control unit 101 may determine the edit position based on an input from input unit 103, and development unit 108 may then perform editing by adding a new character string or modifying an existing string. A character string stored in storage unit 104 may also be used by another application accessible by storage unit 104.

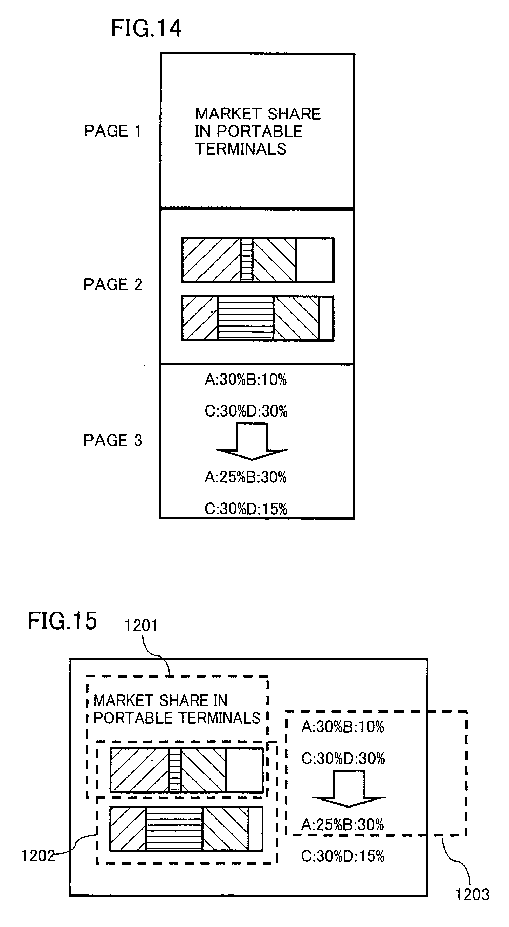

Further, the above document data display processes for the document data described above with reference to Fig. 8 may produce a display shown in Fig. 9 at receiving display device 1b, as described above, although a displayed page may be divided into areas as shown in Fig. 14. That is, the above document data display processes may analyze compressed document data received at step S201 and extract an end tag and perform the processes from step S203 onward for each tag, such that the data may be expanded stepwise and displayed for each area. In this way, receiving display device 1b may require less memory for display.

Receiving display device 1b may allow the display region to be moved (scrolled) to the top of a desired area, as shown in Fig. 15, which shows regions 1201, 1202 and 1203. As an example, with region 1202 being displayed, a key for movement to a preceding area (for example the numerical key "4") may be depressed to cause region 1201 to be displayed, and a key for movement to a following area (for example the numerical key "5") may be depressed to cause region 1203 to be displayed.

Further, receiving display device 1b may allow a change in display scaling factor based on the width or height of the display screen and the width or height of a region provided from the analysis of layout information at the above step S203 for each page. As an example, for a page area that is 20 pixels wide and 10 pixels high and a display screen that is 100 pixels wide and 200 pixels high, aspect ratio may be changed to align the width and height of the page area with those of the display screen by increasing the width by a factor of 5 and the height by a factor of 20, or the width of the page area may be aligned with the width of the display screen without changing aspect ratio, where the width is increased by a factor of 5 and the height by a factor of 5.

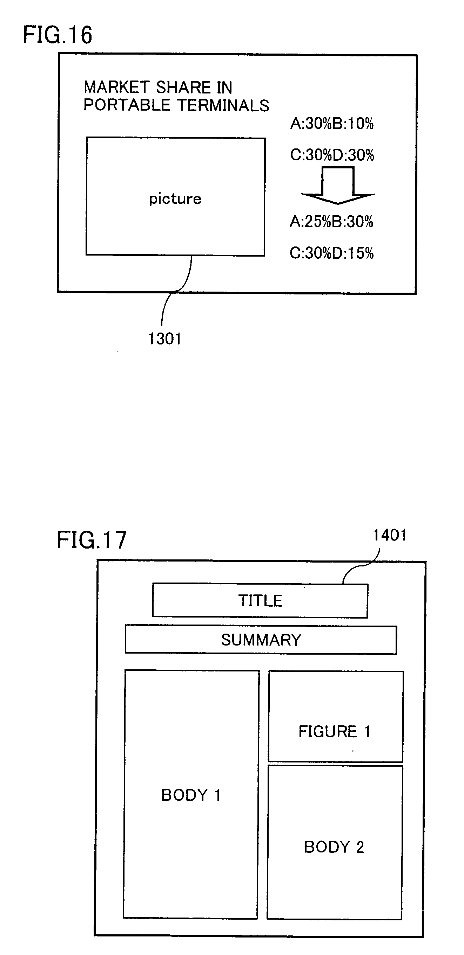

Alternatively, receiving display device 1b may display another image (substitute image) 1301 as shown in Fig. 16, rather than expanding image portion 1002. Alternatively, text may be substituted for an image. That is, conversion server 2 that has received document data for document data display device 1b from document data display device 1b may replace part of the document data by substitute text or an substitute image while creating compressed document data. When conversion server 2 uses substitute text or a substitute image for replacement, document data display device 1 b may preferably display a frame or the like indicating the region in which the substituted text or image is disposed. Further, when a program or data stored in storage unit 104 is used for substitute text and an substitute image to be displayed at document data display device 1b, the substitute text and the substitute image may not be included in the compressed document data created by conversion server 2.

Moreover, while receiving display device 1b with the conversion capability or conversion server 2 is converting document data to compressed document data, a portion of the document data may be converted into graphics or an image, such as preinstalled substitute graphics or a substitute image, or graphics or an image provided from original document data by converting the scaling factor for a portion of the original document data, for example.

When layout information in the compressed document data includes information for determining the class of a text or image portion, document data display device 1b may display substitute text or a substitute image in accordance with such information. As an example, referring to Fig. 17, a text portion 1401 classified as a title displays the substitute text string "TITLE" and a frame indicating the region in which it is disposed. Similarly, substitute text strings such as "SUMMARY" "BODY 1" "BODY 2" and "FIGURE 1" may be displayed. A plurality of strings of the same class such as the strings "BODY 1 ", "BODY 2" may be present, where they may be distinguished from each other by serial numbers.

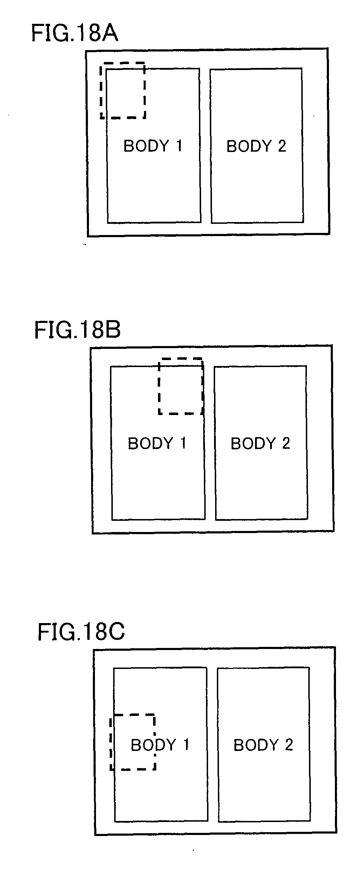

Document data display device 1b may also use a broken line to indicate which area of a document is being displayed, as shown in Figs. 18A to 18C. When a display area is around the upper left corner of one of several blocks of a document as shown in Fig. 18A, a depression of a key (for example the numerical key "6") for moving (scrolling) the display area to the right at the above step S213 causes execution of the process of changing the display region at step S215 where, based on this input order and the result from the analysis of layout information at the above step S203, the display area is moved to the right by one or more letters until it reaches the end of the block in which the display area is currently displayed, as shown in Fig. 18B. A further depression of the key for movement to the right at this time may either allow the display area to remain in the position shown in Fig. 18B without moving further to the right, or may cause the display area to move to the left of the block in the row directly below the current row, as shown in Fig. 18C. The scroll width may be a predetermined width or may be determined based on the result of the analysis of layout information at the above step S203.

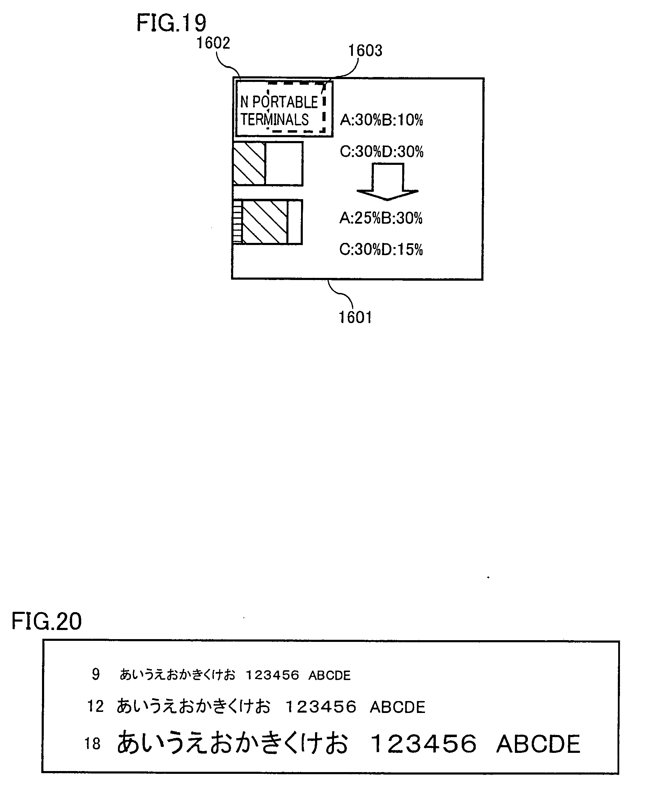

As shown in Fig. 19, a portion of a document may be displayed on a display screen 1601 of document data display device 1b, where a display 1602 indicating the entire document and a display 1603 indicating the display region may be displayed in a translucent manner or as a background in addition to the portion of the document displayed on display screen 1601, in order to indicate which region in the entire document is being displayed. Alternatively, a side of the frame of a display region in contact with an undisplayed region may be in a color different from normal in order to indicate the presence of an undisplayed region to that direction.

Such a display region may be a predetermined region or may be determined based on the result of the analysis of layout information at the above step S203. Displayed contents may also be modified based on the size of display screen 1601 and the result of the analysis of layout information.

Such display processing at document data display device 1 according to the present embodiment may provide appropriate display even for a smaller display unit 109 incapable of displaying the entire region of a document.

For some terminals that display document data, displayable fonts may be limited to a few character sizes, or a character in some sizes may not be displayed in high quality. For example, as shown in Fig. 20, a terminal may be capable of displaying a character in sizes of 9, 12 and 18 points in high quality, where control unit 101 of the document data display device may provide a character size that will allow text in a document to be displayed in high quality by first determining a display scaling factor for the document data used at steps S205, S207 for modification by this factor based on the font size(s) that will allow display by the document data display device and on the font size(s) included in the document data derived from the analysis of layout information at the above step S203, or a user may be allowed to select a display scaling factor that will allow high quality display. Alternatively, a display scaling factor that only results in low quality display may be excluded from selection.

When a document to be displayed has characters of different sizes, the document data display device may provide a display scaling factor that will allow characters near a specified location to be displayed in high quality, or may provide a display scaling factor that will allow displaying the largest of the groups of characters within a specified area in high quality. For example, a document data output device, which is represented by a document data display device capable of outputting in high quality a character in sizes of 8, 12, 16 and 24 points, may output (display) document data having characters of 8 points as well as those of 11 points, where a character size of 8 points may have the largest of the groups of characters in the vicinity of the center for scaling-up/down or the character closest to the center where only output scaling factors of 1, 1.5, 2 and 3 can be selected to allow those character(s) to be enlarged in high quality, or, for 11 points, only output scaling factors of 8/11, 12/11, 16/11 and 24/11 can be selected. Output scaling factors calculated both for 8 and 11 points may also be selectable. Similarly, selectable output scaling factors may be limited depending on the character size of the largest of the groups of characters in the current output region or in the entire document data. Thus, a document data display device may output, at a position included in layout information, a character in an available character size corresponding to an output scaling factor.

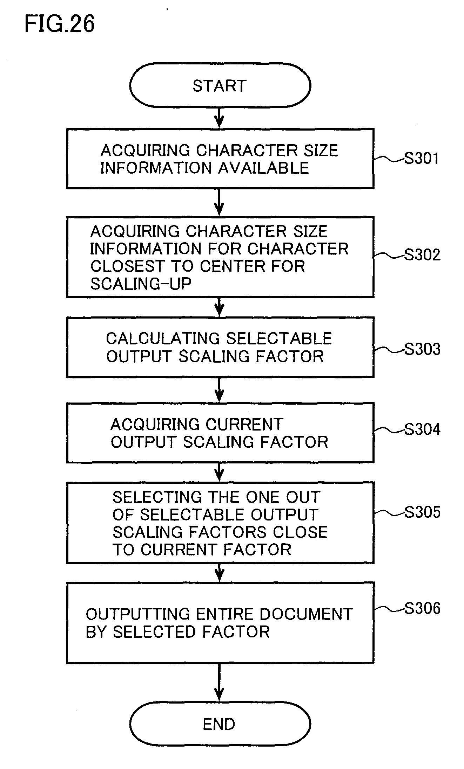

Description will now be made to a procedure for calculating an output scaling factor in conjunction with the above example in the connection with output of a character in an available size with reference to the flowchart of Fig. 26. The processes shown in the flowchart of Fig. 26 are implemented by control unit 101 of a document data output i.e. display device 1 reading a program stored in storage unit 104 and executing it.

Referring to Fig. 26, control unit 101 first acquires available character size information in storage unit 104 (S301). Again, document data display device 1 may be capable of displaying (outputting) a character in sizes of 8, 12, 16 and 24 points, for example.

Layout information analyzing unit 107 then acquires character size information of the character closest to the center for the current scaling-up/down (S302). For example, the character closest to the center for the current scaling-up may be in a size of 9 points as the document data is presented without being scaled up nor down.

Control unit 101 then calculates selectable output scaling factors (S303) based on available character size information acquired at step S301 and on the character size of the character closest to the center for scaling-up/down acquired at step S302. In this example, scaling factors of 8/9, 12/9, 16/9 and 24/9 are calculated and only these are selectable.

Next, control unit 101 acquires a current output scaling factor (S304) and, from among the selectable output scaling factors calculated at step S303, selects the one closest to the current factor as the output scaling factor with scaling-up/down (S305). For example, if a current output scaling factor of 1.5 is acquired at step S304, step S305 selects an output scaling factor with scaling-up by 16/9, or an output scaling factor with scaling-down by 12/9. Development unit 108 then outputs the document by the output scaling factor selected at step S305 (S306).

When the determined display scaling factor does not allow the document to be displayed in high quality or when the display scaling factor does not have a corresponding character size available, the document data display device may display the document data in another character size corresponding to the display scaling factor closest to the determined factor. For example, a character in 11 points may be displayed by using a character in 12 points i.e. the closest size that will allow the character to be displayed in high quality, or by using a character in 9 points i.e. the size that is smaller than the intended size and closest to it. When a character in 11 points is to be displayed in 9 points, for example, the character may preferably be displayed at a reference position calculated for the original display size (11 points). The reference position of a character is predefined in the lower left corner of the character in the case of displaying document data with horizontal, left-to-right writing, and at the center along the upper edge of the character in the case of displaying document data with vertical writing with centering, for example. Displaying a character in the size that is smaller than the original character size and closest to it thus can avoid superimposed characters which are hard to read and is advantageous when display quality is to be improved or when the originally intended character size is not available. When document data cannot be displayed in high quality, for example, a graphic such as a rectangle may replace the relevant area instead of changing the character size.

A control unit 101 of document data display device 1 may include a means for generating a character in free character sizes, where control unit 101 of document data display device 1 may use this means at the above step S209 to generate, in accordance with a display scaling factor, a character in a size of characters included in a character area or in a size determined from a calculated output scaling factor, whereby display unit 109 may then display it at step S211. Generally, the shape of a character is stored as vector data such that generation of characters in free sizes requires large storage area for displaying all the characters. Accordingly, only some frequently used characters such as alphanumeric and hiragana characters may be prestored. Further, control unit 101 of document data display device 1 may determine a displayed character from among characters in a predetermined size that have been generated and available characters included in attribute information based on character code or character size, and display unit 109 may then display an available character included in the attribute information instead of a character generated by the generating means. Output of an available character instead of a character generated by the generating means is preferable when an available character included in attribute information can be displayed in higher quality than a character generated by the generating means or when a character that cannot be generated by the generating means is to be displayed.

Such display processing at document data display device 1 according to the present embodiment may provide optimized character display under font limitations.

According to the present embodiment, document data after being edited by the above display processing may be stored in storage unit 104. A document data display device 1 may include a conversion server 2 as well as text, image and layout compression units 205, 206 and 207, where text compression unit 205 included in display device 1 may lossless compress a text portion in document data and image compression unit 206 may compress an image portion, and storage unit 104 may then store them all, including layout information, as compressed data. Also, compressed document data received by sending/receiving unit 102 or document data or compressed document data stored in storage unit 104 may be transmitted, where the compression ratio or compression scheme for the text and image portions may be changed or layout information may be changed to transmit thus created compressed document data. Control unit 101 may further include a means for acquiring capability of destination equipment at sending/receiving unit 102, where text compression unit 205 and/or image compression unit 206 may perform the above compression while taking into consideration the screen size or memory size, the number of displayable colors, for example. As an example, to compress an image that has 200 pixels in each column and each row in its original document data, the image may be compressed to 50 pixels in each column and row when the destination equipment has a screen size of 100 pixels in each column and row, or to 10 pixels in each column and row when the destination equipment has a screen size of 50 pixels in each column and row. Processes for accommodating attributes of a receiving device will be described below.

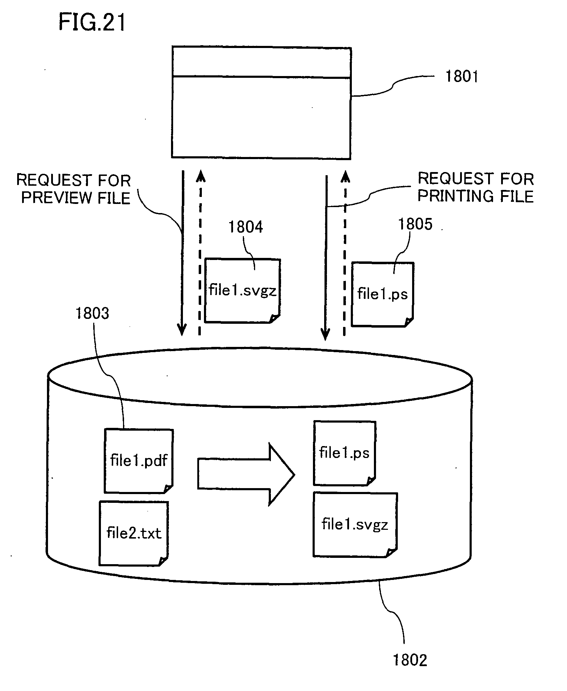

Referring to Fig. 21, a printer 1801 may include a configuration and functions similar to those of document data display device 1 shown in Fig. 2, where it may access a file server 1802, and a display unit 109 of printer 1801 corresponding to display unit 109 of document data display unit 1 may then display a preview of the contents of document data 1803 contained in file server 1802. For this purpose, control unit 101 of printer 1801 uses a sending/receiving unit 102 to request a preview file from file server 1802. File server 1802 may respond to the request and generate preview document data 1804 from document data 1803 and send it to printer 1801, which may perform the above display processes and display unit 109 may display a preview of document data 1804.

Similarly, printer 1801 may access file server 1802 in order to print the contents of document data 1803 contained in file server 1802. For this purpose, control unit 101 of printer 1801 uses sending/receiving unit 102 to request a printing file from file server 1802. File server 1802 may respond to the request and generate a printing document data 1805 from document data 1803 and send it to printer 1801, which performs output processes i.e. the display processes described above, and an output unit i. e. printing unit corresponding to display unit 109 may output, or print, document data 1805.

Alternatively, preview document data 1804 and printing document data 1805 may be generated before printer 1801 requests then and after document data 1803 has been stored in file serve 1802. Printing document data 1805 may be generated by printer 1801 from preview document data 1804 and may then be printed, or preview document data 1804 may be generated from printing document data 1805 to display a preview.

Prior to a request, control unit 101 of printer 1801 may acquire from printer 1801 a list for document data that can be sent from printer 1801 via sending/receiving unit 102 and receive through input unit 103 selection of document data 1803 or preview document data 1804 within the list and then request selected document data.

Document data stored in memory in the printer may be displayed by a display device of the printer. The document data may include animation that may be used for operator guidance.

### [Variation]

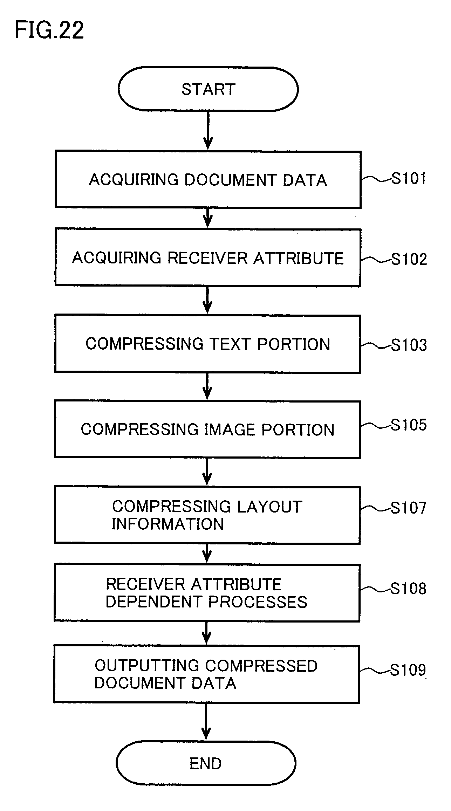

A variation in which a conversion server 2 performs conversion in accordance with an attribute of receiving document data display device 1b will now be described with reference to Fig. 22. In this variation, it may receive document data from a sending document data display device A(1a) via gateway A(3a) and convert it in accordance with an attribute acquired of gateway B(3b) or receiving display device 1b via gateway B(3b).

More specifically, referring to Fig. 22, conversion server 2 according to the variation acquires document data at the above conversion step S101 shown in Fig. 4 before acquiring an attribute of receiving display device 1b, and performs the compression processes of steps S103 to S107 before the compressed document data is processed at step S108 in accordance with the acquired attribute. Step S109 then outputs the compressed document data. When the result from step S108 does not satisfy the attribute acquired at step S102, the processes of steps S103 to S108 may be repeated several times.

Attributes of receiving display device 1b acquired at step S102 may be, for example, capability of document data display device 1b to process or display document data, or allowable file size for the communication network through which data is transmitted to document data display device 1b. Information regarding these attributes, i.e. attribute information, may be stored in storage unit 104 of receiving display device 1b or may be prestored in storage unit 104 of sending display device 1a, where such information may be transmitted to conversion server 2 via gateway A(3a). It may also be sent to conversion server 2 from receiving display device 1b in response to a request by conversion server 2. Gateway B(3b) may be a public carrier's device and the attribute information may be stored in such a gateway B(3b), where it may be sent to conversion server 2 from gateway B(3b) in response to a request by conversion server 2. In addition to, or instead of, gateway B(3b), a server communicatable with conversion server 2 may also be a public carrier's or Web service provider's device and the attribute information may be stored in this server to be transmitted in response to a request by conversion server 2.

One of a plurality of receiver attribute information sets may be selected, or a plurality of attributes included in one attribute information set may determine what should be converted. For example, scale for the entire document data, size or compression ratio of an image may be modified depending on screen size and font type.

The attribute-dependent processing at step S108 may be, for example: modifying the compression ratio of an image; converting part or all of a text or graphics portion into an image; converting part or all of a text or image portion into graphics; repeating thereafter steps S103 to S108; or dividing document data.

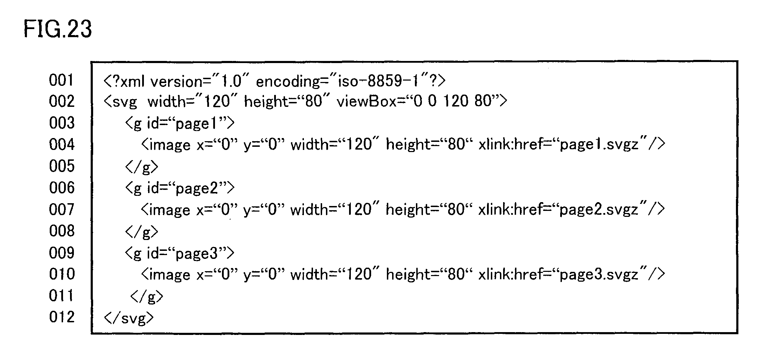

Fig. 23 shows an example of a file describing a structure of pages into which document data has been divided at step S108. Referring to Fig. 23, lines 4, 7 and 10 describe the respective pages' file names after division. The pages' files after division may be those shown in Fig. 8. The division may not be page-based. For example, the size for division may be determined based on attribute information about destination display device 1b stored in attribute storage unit 208, predetermined attribute information after conversion, or other attribute information such as traffic available in the document data display system.

Document data display device 1b that has received the document data divided as above may preferably treat a plurality of divided files as if they were a single file. This may be implemented by conversion server 2 adding an identifier to a header, for example, of the divided document data segments at the above division step S108, to identify the pre-division document data set; control unit 101 of document data display device 1b analyzing the identifier and combining the divided document data segments of the one document data set; and development unit 108 developing the one document data set and display unit 109 displaying it. Alternatively, conversion server 2 may generate separate files including information that identifies the pre-division document data set and information that identifies the divided document data segments, and output them together with the divided document data segments; control unit 101 of document data display device 1b may then combine the divided document data segment based on the files; and development unit 108 may then develop this one document data set to be displayed by display unit 109.

Thus, conversion server 2 may divide document data to be transmitted in order to reduce the load upon the communication network. Receiving display device 1b may download the divided files and treat them as if they were a single file thereby simplifying management. Further, such document data composed of a plurality of files may be displayed one at a time to reduce necessary memory for display processes.

It should be noted that such division may also be applicable in the case of sending document data of a large file size via a network 2003 from a file server 2002 to a document data display device 2001 as shown in Fig. 24. Network 2003 may have transmission size limitations and thus transmission may sometimes be impossible. Thus, file server 2002 divides a file in a similar process as the above conversion server 2 and sends the divided files to document data display device 2001 via network 2003 and gateway 2004.

Further, the attribute-dependent processing at step S108 may be, in addition to document data division and the other processes described above, the addition to compressed document data of additional information used by display device 1b for display, for example. The additional information may be, for example, information of skip adapted to the size of display 109 of document data display device 1b, or information specifying a display action corresponding to an operation at input unit 103.

Conversion server 2 may also modify the compression ratio for the compression processes of steps S103 to S107 based on an attribute of receiving display device 1b acquired at step S102, or may modify the size of an image in compressed document data. Thus, the size of output document data may be optimized in accordance with an attribute of receiving display device 1b.

Conversion server 2 may also convert part or all of document data into an image to be sent to receiving display device 1b. Conversion server 2 may also send a converted image to receiving display device 1b together with conversion information that allows conversion server 2 to identify the original data set that has been converted to the image as well as its region. For example, conversion server 2 may convert document data into images on a page basis to be sent to document data display device 1b and the image of the converted Page 5 may be viewed at document data display device 1b before the actual (pre-conversion) document's Page 5 is displayed, where document data display device 1b sends conversion information for the image of Page 5 as request-to-send to conversion server 2 which, upon receiving from document data display device 1b the request-to-send for Page 5 of the pre-conversion document, sends document data to document data display device 1b, this document data including text, graphics and image portions and associated layout information required to display Page 5 of the document.

The above-described method of converting and displaying document data may be provided as a program. Such a program may be provided as a program product, stored on a computer-readable medium such as a flexible disk, compact disk-read only memory (CD-ROM), ROM, RAM and a memory card included with a computer. The method may also be provided as a program stored on a hard disk incorporated in a computer or other media. It may also be provided as a program downloaded via a network.

The provided program product is installed to a program storage such as a hard disk for execution. The program product includes a program itself and a medium storing the program.

It should be understood that the disclosed embodiment above is, in all respects, by way of illustration only and is not by way of limitation. The scope of the present invention is set forth by the claims rather than the above description and is intended to cover all the modifications within a spirit and scope equivalent to those of the claims.

### Industrial Applicability

As described above, the present invention may allow a device that receives document data to appropriately display the document or otherwise present it by printing, for example, and thus is advantageously applicable to a document data display device, a cell phone device, a document data output device, a document data printing device, a document data display method, a document data output method, a document data display program product and a document data output program product.

## Claims

1. A document data display device comprising:
a receiving unit (102) receiving, from another device, compressed document data that includes at least one of one or more lossless compressed text portion(s) and one or more lossless or lossy compressed image portion(s), and further includes layout information for said text portion(s) and/or said image portion(s);
an expansion unit (105, 106) expanding at least one of said compressed text and image portions included in said compressed document data received by said receiving unit (102); and
a display unit (108, 109) displaying the document data expanded by said expansion unit (105, 106) in accordance with said layout information.

2. The document data display device according to claim 1, further comprising a display scaling factor changing unit (101, 108) changing a display scaling factor for said compressed document data.

3. The document data display device according to claim 1, further comprising a display region changing unit (101, 108) changing a display region of said compressed document data.

4. The document data display device according to claim 3, wherein said display region changing unit (101, 108) determines a position to which said display region is changed based on said layout information.

5. The document data display device according to claim 1, further comprising:
a text selection unit (103) selecting at least one portion of said text portion included in said document data; and
a storage unit (104) storing said selected text portion.

6. The document data display device according to claim 5, wherein said storage unit (104) stores, in addition to said selected text portion, layout information for said selected text portion.

7. The document data display device according to claim 5, further comprising an editing unit (101, 108) editing document data using said text portion stored in said storage unit (104).

8. The document data display device according to any one of claims 1 to 7, further comprising:
a text editing unit (101, 108) editing said text portion included in said document data;
an editing position specifying unit (103) specifying a position at which said editing is performed; and
a document data storage unit (104) storing said document data on which said editing has been performed.

9. The document data display device according to claim 8, further comprising a compression unit (205, 206) compressing said edited document data into compressed document data that includes at least one of one or more lossless compressed text portion(s) and one or more lossless or lossy compressed image portion(s) and further includes layout information for said text portion(s) and/or said image portion(s),
wherein said document data storage unit (104) stores said compressed document data.

10. The document data display device according to claim 8 or 9, further comprising a sending unit (102) sending, to other equipment, said received compressed document data or said document data stored in said document data storage unit (104).

11. The document data display device according to claim 10, further comprising:
a destination equipment capability acquisition unit (101, 102) acquiring a capability of destination equipment; and
a converted data creation unit (205, 206) creating converted data by converting, depending on said capability of said destination equipment, said received compressed document data or said document data stored in said document data storage unit (104),
wherein said sending unit (102) sends said converted data to said destination equipment.

12. The document data display device according to any one of claims 1 to 11, wherein said receiving unit (102) receives document data that includes at least one of one or more text portion(s) and one or more image portion(s) and further includes layout information for said text portion(s) and/or said image portion(s),
further comprising a compressed data creation unit (205, 206, 207) converting said received document data, depending on a capability of equipment, to compressed document data that indicates at least one of one or more lossless compressed text portion(s) and one or more lossless or lossy compressed image portion(s) and further includes layout information for said text portion(s) and/or said image portion(s).

13. The document data display device according to claim 1, wherein, depending on said layout information, said display unit (108, 109) displays document data using substitute text or a substitute image for said text portion or said image portion that has not been expanded by said expansion unit (105, 106).

14. A document data display device comprising:
a receiving unit (102) receiving, from another device, document data that includes at least one of a text portion, a graphics portion and an image portion and further includes layout information therefor; and
a display unit (108, 109) displaying said document data in accordance with said layout information.

15. The document data display device according to claim 14, further comprising a display scaling factor determination unit (101) determining a display scaling factor for said document data based on a character size that allows display and on character size information included in said document data.

16. A document data display device comprising:
a document data combining unit (101) combining a plurality of divided document data segments into one original document data set; and
a display unit (108, 109) displaying said divided document data segments as the one document data set.

17. A cell phone device including the document data display device according to any one of claims 1 to 16.

18. A method of displaying document data, comprising the steps of:
receiving (S201), from another device, compressed document data that includes at least one of one or more lossless compressed text portion(s) and one or more lossless or lossy compressed image portion(s) and further includes layout information for said text portion(s) and/or said image portion(s);
expanding (S205, S207) at least one of said compressed text and image portions included in said compressed document data; and
displaying (S211) the document data expanded at said steps (S205, S207) in accordance with said layout information.

19. A program product for causing a computer to execute a data display method comprising the steps of:
receiving (S201), from another device, compressed document data that includes at least one of one or more lossless compressed text portion(s) and one or more lossless or lossy compressed image portion(s) and further includes layout information for said text portion(s) and/or said image portion(s);
expanding (S205, S207) at least one of said compressed text and image portions included in said compressed document data; and
displaying (S211) the document data expanded at said steps (S205, S207) in accordance with said layout information.

20. A document data output device, comprising:
an output unit (108, 109) outputting document data, said document data including area data information regarding at least one of a character area, a graphics area and an image area and further including layout information for said area; and
an output control unit (101) controlling output of said document data at said output unit (108, 109) based on said area data information and said layout information included in said document data, and on attribute information about said output unit (108, 109).

21. The document data output device according to claim 20, wherein said output control unit (101) further includes a scaling factor changing unit (101, 108) deciding and changing an output scaling factor for said document data at said output unit (108, 109) based on said area data information and said layout information included in said document data and on said attribute information.

22. The document data output device according to claim 21, wherein said output control unit (101) controls said output unit to output an area depending on said area data information included in said document data to be replaced by a graphic or an image based on said output scaling factor determined by said scaling factor changing unit (101, 108), said document data and said attribute information.

23. The document data output device according to any one of claims 20 to 22, wherein said output control unit (101) further includes an output region changing unit (101, 108) deciding and changing an output region for said document data at said output unit (108, 109) based on said layout information.

24. The document data output device according to any one of claims 20 to 23, wherein said output control unit (101) controls said output unit to output an area depending on said area data information included in said document data replaced by a graphic or an image to be output, using said layout information.

25. The document data output device according to claim 20, wherein said output control unit (101) further includes a character size determination unit (101) determining a character size for output at said output unit (108, 109) from among a plurality of available character sizes included in said attribute information in accordance with a character size of a character included in said character area, when said output unit (108, 109) outputs the document data including said area data information regarding said character area.

26. The document data output device according to claim 20, wherein said layout information includes information regarding a character size and position of a character included in said character area, and
said output control unit (101) further includes a character size determination unit (101) calculating an output scaling factor for said document data at said output unit (108, 109) based on said area data information and said layout information included in said document data and on said attribute information to determine a character size and position for output at said output unit (108, 109) based on said calculated output scaling factor.

27. The document data output device according to claim 25 or 26, wherein said character size determination unit (101) determines, as a character size for output at said output unit (108, 109), a character size smaller than a character size of a character included in said character area or a character size determined from said calculated output scaling factor.

28. The document data output device according to claim 20, wherein said layout information includes information regarding a character size and position of a character included in said character area, and
said output control unit (101) calculates an output scaling factor for said document data at said output unit (108, 109) based on a character size of said layout information and an available character size included in said attribute information to control said output unit to output said character at a position included in said layout information in an available character size corresponding to said calculated output scaling factor.

29. The document data output device according to claim 20, further comprising a character generation unit (101) generating a character in an arbitrary character size,
wherein said output control unit (101) controls said output unit to output the character in said arbitrary size generated by said character generation unit (101) in accordance with at least a character size of a character included in said character area and, as necessary, an output scaling factor for said document data at said output unit (108, 109) if document data is to be output including area data information regarding said character area at said output unit (108, 109).

30. The document data output device according to claim 20, further comprising:
a character generation unit (101) generating a character in an arbitrary character size; and
a used character determination unit (101) determining a character to be output at said output unit (108, 109) from among said character in said arbitrary character size generated by said character generation unit (101) and an available character included in said attribute information in accordance with a character code or a character size.

31. A method of outputting document data at a document data output device, comprising the steps of:
storing (S201) document data in a storage unit of said document data output device, the document data including at least one of a character area, a graphics area and an image area and further including data of said area and layout information about said area;
outputting (S211) the document data at an output unit of said document data output device; and
controlling (S209) output of said document data at said output unit based on at least one attribute information set stored in an attribute information storage unit of said document data output device storing one or more attribute information set(s) about said output unit, and on said document data stored in said storage unit.

32. A program product causing a computer to execute a method of outputting document data, the document data including at least one of a character area, a graphics area and an image area, and further including data of said area and layout information for said area, the method comprising the steps of:
storing (S211) said document data in a storage unit of a document data output device;
outputting (S211) the document data at an output of said document data output device; and
controlling (S209) output of said document data at said output unit based on at least one attribute information set stored in an attribute information storage unit of the document data output device storing one or more attribute information sets about said output unit, and on said document data stored in said storage unit.

33. A document data printing device, comprising:
a request-to-send unit (101, 102) requesting document data to be sent from other equipment:
a receiving unit (102) receiving, from another device, document data including at least one of a text portion, a graphics portion and an image portion and further including layout information therefor;
a display unit (108, 109) displaying said document data in accordance with said layout information; and
a printing unit (108, 109) printing said document data.

34. The document data printing device according to claim 33, wherein said request-to-send unit (101, 102) requests document data to be used in printing at said printing unit (108, 109) apart from the document data displayed at said display unit (108, 109).

35. The document data printing device according to claim 33, further comprising:
a document list acquisition unit (101, 102) acquiring, from said other equipment, a list for document data that can be transmitted by said other equipment; and
a document selection unit (103) selecting document data requested by said request-to-send unit (101, 102) from said list of document data.

36. The document data printing device according to claim 33, further comprising a storage unit (104) storing said received document data,
wherein said display unit (108, 109) displays the document data stored in said storage unit (104).
